(19) 

**Europäisches Patentamt**
**European Patent Office**
**Office européen des brevets**

(11) **EP 4 786 501 A1**

(12) **EUROPEAN PATENT APPLICATION**
published in accordance with Art. 153(4) EPC

(43) Date of publication:
05.08.2026 Bulletin 2026/32

(21) Application number: 25768664.2

(22) Date of filing: 07.03.2025

(51) International Patent Classification (IPC):
$C08C\ 19/02^{(2006.01)}$  $C08L\ 15/00^{(2006.01)}$
$C08F\ 236/12^{(2006.01)}$  $C08F\ 2/24^{(2006.01)}$
$C08K\ 3/04^{(2006.01)}$  $H01M\ 4/62^{(2006.01)}$
$H01M\ 4/139^{(2010.01)}$  $H01M\ 10/0525^{(2010.01)}$

(52) Cooperative Patent Classification (CPC):
C08C 19/02; C08F 2/24; C08F 236/12; C08K 3/04;
C08L 15/00; H01M 4/139; H01M 4/62;
H01M 10/0525

(86) International application number:
PCT/KR2025/003051

(87) International publication number:
WO 2025/188108 (11.09.2025 Gazette 2025/37)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 07.03.2024 KR 20240032865

(71) Applicant: **LG Chem, Ltd.**
**Seoul 07336 (KR)**

(72) Inventors:
• **CHOI, Woo Seok**
**Daejeon 34122 (KR)**

• **LEE, Se Eun**
**Daejeon 34122 (KR)**
• **KIM, Byoung Yun**
**Daejeon 34122 (KR)**
• **JO, In Sung**
**Daejeon 34122 (KR)**
• **LEE, Jae Min**
**Daejeon 34122 (KR)**

(74) Representative: **Vossius & Partner**
**Patentanwälte Rechtsanwälte mbB**
**Siebertstraße 3**
**81675 München (DE)**

(54) **HYDROGENATED NITRILE-BASED LATEX, MANUFACTURING METHOD THEREFOR, AND CONDUCTIVE MATERIAL DISPERSION**

(57) The present invention relates to a hydrogenated nitrile-based latex including a hydrogenated nitrile-based copolymer exhibiting excellent processability and low molecular weight characteristics with superior wettability and dispersibility with respect to conductive materials, a method for manufacturing the same, and a conductive material dispersion, and provides a hydrogenated nitrile-based latex including a hydrogenated nitrile-based copolymer having an oxime content of 0.1 wt% to 6.5 wt%, a method for manufacturing the same, and a conductive material pre-dispersion.

EP 4 786 501 A1

**Description**

## TECHNICAL FIELD

### Cross-reference to Related Applications

This application claims the benefit of Korean Patent Application No. 10-2024-0032865, filed on March 7, 2024, in the Korean Intellectual Property Office, the disclosure of which is incorporated herein in its entirety by reference.

### Technical Field

The present invention relates to a hydrogenated nitrile-based latex including a hydrogenated nitrile-based copolymer having low molecular weight characteristics and exhibiting excellent processability and superior wettability and dispersibility with respect to conductive materials, a method for manufacturing the same, and a conductive material dispersion including the hydrogenated nitrile-based copolymer.

## BACKGROUND ART

Secondary batteries are batteries which may be repeatedly used through a discharging process in which chemical energy is converted into electrical energy and a reverse charging process. The secondary batteries include a positive electrode, a negative electrode, an electrolyte, and a separator, and in general, the positive electrode and the negative electrode include an electrode current collector and an electrode active material layer formed on the electrode current collector. An electrode slurry composition including an electrode active material, a conductive material, a binder, and the like is applied onto an electrode current collector, dried, and then roll pressed to prepare the electrode active material layer.

Various materials may be used as the conductive material, but a technique using carbon nanotubes as the conductive material to maximize conductivity has recently gained prominence.

However, the carbon nanotubes are not uniformly dispersed in an electrode slurry and are easily aggregated, and accordingly, the conductive material is not evenly distributed in the electrode active material layer when an electrode is formed by using the carbon nanotubes. To overcome the limitation described above, a method has been developed in which, after a conductive material dispersion is prepared by first mixing the conductive material in a solvent together with a dispersant such as polyvinyl pyrrolidone (hereinafter, PVP) and a hydrogenated acrylonitrile-butadiene rubber, the conductive material dispersion is used in the electrode slurry.

However, the conductive material dispersion using the PVP dispersant exhibits a sharp increase in viscosity when an amount of the conductive material is increased, and thus there is a limit to increasing the amount of the conductive material, leading to a limited improvement in electrical conductivity.

In addition, when using the general hydrogenated acrylonitrile-butadiene rubber, the viscosity of the conductive material dispersion is excessively increased in a process of storing the prepared conductive material dispersion, and when the conductive material dispersion is exposed to high temperature during electrode slurry preparation, the viscosity of the electrode slurry is excessively increased. In addition, when the viscosity of the conductive material dispersion is increased as described above, the electrode slurry prepared using the conductive material dispersion may remain inside the pipes during storage and transfer of the electrode slurry, thereby leading to difficulties in controlling the discharge of the electrode slurry and consequently reducing coating processability.

Meanwhile, the hydrogenated acrylonitrile-butadiene rubber is manufactured through the hydrogenation reaction of nitrile-based rubber, which is a polymer prepared by copolymerizing an ethylenically unsaturated nitrile-based monomer, such as acrylonitrile, and a conjugated diene-based monomer, such as 1,3-butadiene, and as a special rubber exhibiting excellent heat resistance, ozone resistance, chemical resistance, and oil resistance, the hydrogenated acrylonitrile-butadiene rubber is widely used in various applications including timing belts, seals, hoses, diaphragms, and rolls.

The commercially available hydrogenated acrylonitrile-butadiene rubber is presently manufactured by a process in which nitrile-based rubber is dissolved in a solvent, and subjected to a reaction with gaseous hydrogen at high temperature and high pressure in the presence of a precious metal catalyst to hydrogenate double bonds in the nitrile-based rubber, and then the used catalyst and the solvent are removed. This process is rather complex and costly due to the use of high-pressure reactors and precious metal catalysts, along with environmental concerns arising from solvent use and the limitation of using rubber solely in bulk.

An alternative approach is to hydrogenate nitrile-based rubber using diimide in the latex form, which provides benefits not only in terms of safety but also in economic and environmental aspects compared to the typical process that involves the reaction in a high-pressure reactor using hydrogen, a solvent, and an expensive precious metal catalyst.

Despite these multiple benefits, however, commercialization has not been achieved due to the gel formed by side reactions occurring during hydrogenation. In addition, crosslinking takes place in the aggregation, drying, and storage stages during and after the hydrogenation, negatively affecting the properties of a final hydrogenated nitrile-based rubber latex.

Therefore, there is a need for a hydrogenated nitrile-based latex with low molecular weight and high hydrogenation degree, which exhibits low viscosity increase upon long-term storage or exposure to high temperatures and provides improved dispersibility of conductive materials, and a method for manufacturing the same.

[Related Art Document]

[Patent Document]

(Patent Document 1) KR 10-2023-0022000 A (2023. 02. 14.)

## DISCLOSURE OF THE INVENTION

## TECHNICAL PROBLEM

An aspect of the present invention provides a hydrogenated nitrile-based latex including a hydrogenated nitrile-based copolymer having controlled oxime content or residual double bond content, weight average molecular weight, and oxime content, which may improve the stability and viscosity characteristics of a dispersion while improving the dispersibility of a conductive material when applying the conductive material dispersion.

Another aspect of the present invention provides a method for manufacturing a hydrogenated nitrile-based latex including the hydrogenated nitrile-based copolymer.

In addition, another aspect of the present invention provides a conductive material dispersion including the hydrogenated nitrile-based copolymer.

## TECHNICAL SOLUTION

To address the above-described tasks, the present invention provides a hydrogenated nitrile-based latex including a hydrogenated nitrile-based copolymer, a method for manufacturing the same, and a conductive material dispersion.

(1) According to an aspect of the present invention, there is provided a hydrogenated nitrile-based latex including a hydrogenated nitrile-based copolymer having an oxime content of 0.1 wt% to 6.5 wt%.

(2) The present invention provides the hydrogenated nitrile-based latex according to (1) above, wherein the hydrogenated nitrile-based copolymer has an oxime content of 0.5 wt% to 6.0 wt%.

(3) The present invention provides the hydrogenated nitrile-based latex according to (1) or (2) above, wherein the hydrogenated nitrile-based copolymer has a residual double bond content of 40 wt% or less.

(4) The present invention provides the hydrogenated nitrile-based latex according to any one of (1) to (3) above, wherein the hydrogenated nitrile-based copolymer has a residual double bond content of 10 wt% or less.

(5) The present invention provides the hydrogenated nitrile-based latex according to any one of (1) to (4) above, wherein the hydrogenated nitrile-based copolymer has a weight average molecular weight of 200,000 g/mol or less.

(6) The present invention provides the hydrogenated nitrile-based latex according to any one of (1) to (5) above, wherein the hydrogenated nitrile-based copolymer has a weight average molecular weight of 100,000 g/mol or less.

(7) The present invention provides the hydrogenated nitrile-based latex according to any one of (1) to (6) above, wherein the hydrogenated nitrile-based copolymer has a weight average molecular weight of 50,000 g/mol or less.

(8) The present invention provides the hydrogenated nitrile-based latex according to any one of (1) to (7) above, wherein the hydrogenated nitrile-based copolymer has a solvent displacement viscosity of 10 cps to 200 cps, and the solvent displacement viscosity is measured using a Brookfield viscometer (#63 spin, 25°C) for a solution in which the hydrogenated nitrile-based copolymer is dissolved at 16 wt% in an amide-based dispersion medium.

(9) The present invention provides the hydrogenated nitrile-based latex according to any one of (1) to (8) above, wherein the hydrogenated nitrile-based copolymer has a residual double bond content of 3 wt% or less, a weight average molecular weight of 5,000 g/mol to 30,000 g/mol, an oxime content of 0.9 wt% to 5.5 wt%, and a solvent displacement viscosity of 10 cps to 50 cps.

(10) The present invention provides the hydrogenated nitrile-based latex according to any one of (1) to (9) above, wherein the hydrogenated nitrile-based copolymer includes an ethylenically unsaturated nitrile-based monomer unit, and a hydrogenated conjugated diene-based monomer unit.

(11) The present invention provides the hydrogenated nitrile-based latex according to (10) above, wherein a weight ratio of the ethylenically unsaturated nitrile-based monomer unit and the hydrogenated conjugated diene-based monomer unit is 28:72 to 39:61.

(12) The present invention provides the hydrogenated nitrile-based latex according to (10) or (11) above, wherein the hydrogenated nitrile-based copolymer further includes a conjugated diene-based monomer unit.

(13) According to another aspect of the present invention, there is provided a method for manufacturing the hydrogenated nitrile-based latex according to any one of (1) to (12) above including a hydrogenated nitrile-based copolymer, the method including polymerizing a monomer mixture including a conjugated diene-based monomer and an ethylenically unsaturated nitrile-based monomer in the presence of an emulsifier to prepare a nitrile-based copolymer (S1); hydrogenating the nitrile-based copolymer to prepare a hydrogenated nitrile-based copolymer (S2); and subjecting the hydrogenated nitrile-based copolymer to ozonolysis and oximation (S3), wherein step (S3) involves bubbling a mixture of air and ozone into the hydrogenated nitrile-based copolymer and adding dropwise 0.05 mol to 0.40 mol of hydroxylamine, and the mixture of air and ozone includes 0.3 mol to 0.7 mol of ozone.

(14) The present invention provides the method according to (13) above, wherein in step (S3), at least 60 wt% of a total input amount of hydroxylamine is added dropwise to the hydrogenated nitrile-based copolymer concurrently with the bubbling of the mixture of air and ozone, and the remainder of the total input amount is added dropwise after the bubbling is completed.

(15) The present invention provides the method according to (13) or (14) above, wherein in step (S1), the monomer mixture includes 28 wt% to 39 wt% of the ethylenically unsaturated nitrile-based monomer.

(16) The present invention provides the method according to any one of (13) to (15) above, wherein the hydrogenating in step (S2) is performed in the presence of an oxidizing agent and a reducing agent.

(17) The present invention provides the method according to any one of (13) to (16) above, wherein step (S3) is performed at a temperature ranging from 0°C to 75°C.

(18) According to another aspect of the present invention, there is provided a conductive material dispersion including a conductive material, a dispersion medium, and a hydrogenated nitrile-based copolymer, wherein the hydrogenated nitrile-based copolymer has an oxime content of 0.1 wt% to 6.5 wt%.

(19) The present invention provides the conductive material dispersion according to (18) above, wherein the hydrogenated nitrile-based copolymer has a residual double bond content of 40 wt% or less and a weight average molecular weight of 100,000 g/mol or less.

(20) The present invention provides the conductive material dispersion according to (18) or (19) above, wherein the hydrogenated nitrile-based copolymer has a solvent displacement viscosity of 10 cps to 200 cps, and the solvent displacement viscosity is measured using a Brookfield viscometer (#63 spin, 25°C) for a solution in which the hydrogenated nitrile-based copolymer is dissolved at 16 wt% in an amide-based dispersion medium.

(21) The present invention provides the conductive material dispersion according to any one of (18) to (20) above, wherein the conductive material dispersion has a viscosity of 1500 Pa.s to 2,500 Pa.s.

(22) The present invention provides the conductive material dispersion according to any one of (18) to (21) above, wherein the conductive material dispersion has a particle size distribution $[(D_{90}-D_{10})/D_{50}]$ of 1 to 2.

(23) The present invention provides the conductive material dispersion according to any one of (18) to (22) above, wherein the conductive material is at least one selected from the group consisting of carbon black, Ketjen black, fullerene, graphene, carbon nanotube, and graphite.

## ADVANTAGEOUS EFFECTS

A hydrogenated nitrile-based latex according to the present invention has an oxime content of 0.1 wt% to 6.5 wt%, and further includes a hydrogenated nitrile-based copolymer having low residual double bond content and molecular weight, thereby exhibiting excellent processability, low viscosity, and excellent dispersibility.

A method for manufacturing a hydrogenated nitrile-based latex according to the present invention involves performing an ozonolysis reaction with controlled ozone content, and introducing an oxime group through an oximation reaction, thereby manufacturing a low molecular weight and low viscosity hydrogenated nitrile-based latex exhibiting excellent processability, low viscosity, and excellent dispersibility.

A conductive material dispersion according to the present invention includes the hydrogenated nitrile-based copolymer, and thus has excellent stability, thereby exhibiting excellent initial and long-term storage viscosity characteristics and excellent conductive material dispersibility.

## MODE FOR CARRYING OUT THE INVENTION

Hereinafter, the present invention will be described in detail to aid in understanding of the present invention.

It will be understood that words or terms used in the description and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

Terms

The term 'latex' as used herein may indicate that a polymer or a copolymer polymerized by polymerization is present in a form dispersed in water or a solvent, and as a specific example, may indicate that fine particles of a rubber-like polymer or fine particles of a rubber-like copolymer polymerized by a polymer are present in a colloidal state in which the fine particles are dispersed in a solvent, and may also be referred to as 'emulsion'.

Hydrogenated nitrile-based copolymer

The present invention provides a hydrogenated nitrile-based latex including a hydrogenated nitrile-based copolymer having low molecular weight and low viscosity.

The hydrogenated nitrile-based latex according to the present invention includes a hydrogenated nitrile-based copolymer having an oxime content of 0.1 wt% to 6.5 wt%.

In addition, the hydrogenated nitrile-based copolymer may have a residual double bond content of 40 wt% or less and a weight average molecular weight of 200,000 g/mol or less, or may have a residual double bond content of 40 wt% or less and a weight average molecular weight of 100,000 g/mol or less.

In addition, the residual double bond content according to the present invention may be 40 wt% or less, 35 wt% or less, 30 wt% or less, 25 wt% or less, 20 wt% or less, 15 wt% or less, 10 wt% or less, 5 wt% or less, 4 wt% or less, 3 wt% or less, or 1 wt% or less. When the residual double bond content of the hydrogenated nitrile-based copolymer according to the present invention is within the above range, the hydrogenated nitrile-based copolymer may be applied to a conductive material dispersion to improve the stability of the dispersion, thereby mitigating viscosity changes caused by high temperature and light.

In addition, the hydrogenated nitrile-based copolymer according to the present invention may have a weight average molecular weight of 200,000 g/mol or less, 100,000 g/mol or less, 80,000 g/mol or less, 50,000 g/mol or less, or 30,000 g/mol or less, and may have a weight average molecular weight of 1,000 g/mol or greater, 2,000 g/mol or greater, 3,000 g/mol or greater, 4,000 g/mol or greater, or 5,000 g/mol or greater. When the weight average molecular weight of the hydrogenated nitrile-based copolymer according to the present invention is within the above range, the hydrogenated nitrile-based copolymer may be applied to a conductive material dispersion to improve the dispersibility of a conductive material.

In addition, the oxime content according to the present invention may be 0.1 wt% or greater, 0.3 wt% or greater, 0.5 wt% or greater, 1.0 wt% or greater, 1.5 wt% or greater, 2.0 wt% or greater, 2.5 wt% or greater, 3.0 wt% or greater, or 3.5 wt% or greater, and may be 6.5 wt% or less, 6.0 wt% or less, or 5.5 wt% or less. When the oxime content of the hydrogenated nitrile-based copolymer according to the present invention is within the above range, a hydrogenated nitrile-based latex including the hydrogenated nitrile-based copolymer may be applied to a conductive material dispersion to improve the dispersibility of a conductive material while exhibiting low molecular weight and low viscosity characteristics.

In addition, according to the present invention, the hydrogenated nitrile-based copolymer may have a solvent displacement viscosity of 10 cps to 200 cps, and the solvent displacement viscosity is measured using a Brookfield viscometer (#63 spin, 25°C) for a solution in which the hydrogenated nitrile-based copolymer is dissolved at 16 wt% in an amide-based dispersion medium.

In addition, the solvent displacement viscosity according to the present invention may be 10 cps or greater or 20 cps or greater, and may be 200 cps or less, 180 cps or less, 160 cps or less, 140 cps or less, 120 cps or less, 100 cps or less, 80 cps or less, 60 cps or less, or 50 cps or less.

In this case, 1,000 cps is equivalent to 1 Pa.s.

In addition, the hydrogenated nitrile-based copolymer may satisfy a molecular weight distribution of 1.0 to 4.0, and specifically, the molecular weight distribution may be 1.5 to 4.0, 1.5 to 3.5, 1.5 to 3.0, or 1.5 to 2.5.

In addition, according to the present invention, the hydrogenated nitrile-based copolymer has a residual double bond content of 3 wt% or less, a weight average molecular weight of 5,000 g/mol to 30,000 g/mol, an oxime content of 0.9 wt% to 5.5 wt%, and a solvent displacement viscosity of 10 cps to 50 cps, and in this case, a hydrogenated nitrile-based latex including the hydrogenated nitrile-based copolymer may be applied to a conductive material dispersion to improve the stability of the dispersion and the dispersibility of a conductive material while exhibiting low molecular weight and low viscosity characteristics.

In general, hydrogenated nitrile-based copolymers are prepared through the hydrogenation reaction of nitrile-based copolymers, and commercially available hydrogenated nitrile-based copolymers are presently prepared by a process in which nitrile-based copolymers are dissolved in a solvent, subjected to a reaction with gaseous hydrogen at high temperature and high pressure in the presence of a precious metal catalyst to hydrogenate double bonds in the nitrile-based copolymers, and then removing the used catalyst and the solvent. Using the precious metal catalyst in a small amount leads to reduced hydrogenation rate and increased molecular weight of the resulting hydrogenated nitrile-based copolymer, which reduces dispersibility and increases viscosity, while using the precious metal catalyst in an appropriate amount or a large amount leads to a large amount of residual metal in the hydrogenated nitrile-based copolymer, which increases viscosity due to the residual metal and requires high costs for removing the residual metal.

However, the hydrogenated nitrile-based latex according to the present invention is manufactured by undergoing ozonolysis and oximation reactions after the hydrogenation reaction of a nitrile-based copolymer, and thus may be formed in which an aldehyde end group of the copolymer is substituted with an oxime group, and accordingly, may have an oxime content within molecules of 0.1 wt% to 6.5 wt%, and may further satisfies the above conditions for residual double bond content and weight average molecular weight, thereby having low viscosity characteristics and low molecular weight, resulting in excellent processability. In addition, the aldehyde end group of the copolymer is substituted with the oxime group, and thus the oxime group is included at one or both ends of a polymer chain constituting the copolymer, thereby facilitating debundling of a conductive material (particularly, carbon nanotubes) through hydrogen bonding between the rubber and the solvent through the inclusion in a conductive material dispersion, resulting in improved stability and dispersibility of the conductive material dispersion.

In addition, the hydrogenated nitrile-based copolymer is prepared by hydrogenating C=C double bonds within a conjugated diene-based monomer unit of a nitrile-based rubber prepared by copolymerizing an ethylenically unsaturated nitrile-based monomer and a conjugated diene-based monomer and consequently including an ethylenically unsaturated nitrile-based monomer unit and a conjugated diene-based monomer unit. Accordingly, the hydrogenated nitrile-based rubber according to the present invention may include an ethylenically unsaturated nitrile-based monomer unit and a hydrogenated conjugated diene-based monomer unit, and may further include a conjugated diene-based monomer unit.

In addition, a weight ratio of the ethylenically unsaturated nitrile-based monomer unit and the hydrogenated conjugated diene-based monomer unit may be 28 to 39:61 to 72, or 30 to 38:62 to 70, or 32 to 36:64 to 68.

The ethylenically unsaturated nitrile-based monomer forming the ethylenically unsaturated nitrile-based monomer unit may be at least any one selected from the group consisting of acrylonitrile, methacrylonitrile, fumaronitrile, $\alpha$-chloronitrile, and $\alpha$-cyano ethyl acrylonitrile. As a specific example, the ethylenically unsaturated nitrile-based monomer may be acrylonitrile or methacrylonitrile, and more specifically, may be acrylonitrile.

The conjugated diene-based monomer forming the hydrogenated conjugated diene-based monomer unit and the conjugated diene-based monomer unit may be at least any one selected from the group consisting of 1,3-butadiene, 2,3-dimethyl-1,3-butadiene, 2-ethyl-1,3-butadiene, 1,3-pentadiene, and isoprene. As a specific example, the conjugated diene-based monomer may be 1,3-butadiene.

In addition, according to the present invention, the hydrogenated nitrile-based copolymer may further include at least any one of an ethylenically unsaturated acid monomer unit or an ethylenically unsaturated monomer unit, as needed.

The ethylenically unsaturated acid monomer forming the ethylenically unsaturated acid monomer unit may be an ethylenically unsaturated monomer containing an acidic group such as a carboxyl group, a sulfonic acid group, or an acid anhydride group. As a specific example, the ethylenically unsaturated acid monomer may include at least one selected from the group consisting of an ethylenically unsaturated acid monomer such as acrylic acid, methacrylic acid, itaconic acid, maleic acid, and fumaric acid; a polycarboxylic anhydride such as maleic anhydride and citraconic anhydride; an ethylenically unsaturated sulfonic acid monomer such as styrene sulfonic acid; and an ethylenically unsaturated polycarboxylic acid partial ester monomer such as monobutyl fumarate, monobutyl maleate, and mono-2-hydroxypropyl maleate. As a more specific example, the ethylenically unsaturated acid monomer may be at least one selected from the group consisting of acrylic acid, methacrylic acid, itaconic acid, maleic acid, and fumaric acid, and as a more specific example, may be methacrylic acid. The ethylenically unsaturated acid monomer may also be used in the form of a salt such as an alkali metal salt or an ammonium salt, upon polymerization. The content of the ethylenically unsaturated acid monomer unit may be 1 wt% to 5 wt% with respect to the total content of the hydrogenated nitrile-based copolymer.

In addition, the ethylenically unsaturated monomer forming the ethylenically unsaturated monomer unit may include at least one selected from the group consisting of a hydroxyalkyl (meth)acrylate monomer having 1 to 4 carbon atoms; a vinyl aromatic monomer selected from the group consisting of styrene, aryl styrene, and vinyl naphthalene; a fluoroalkyl vinyl ether monomer such as fluoroethyl vinyl ether; an ethylenically unsaturated amide monomer selected from the group consisting of (meth)acrylamide, N-methylol (meth)acrylamide, N,N-dimethylol (meth)acrylamide, N-methoxy methyl (meth)acrylamide, and N-propoxy methyl (meth)acrylamide; a non-conjugated diene monomer such as vinyl pyridine, vinyl norbornene, dicyclopentadiene, and 1,4-hexadiene; and an ethylenically unsaturated carboxylic acid ester monomer selected from the group consisting of (meth)acrylic acid methyl, (meth)acrylic acid ethyl, (meth)acrylic acid butyl, (meth)acrylic acid-2-ethylhexyl, (meth)acrylic acid trifluoroethyl, (meth)acrylic acid tetrafluoropropyl, dibutyl maleate, dibutyl fumarate, diethyl maleate, (meth)acrylic acid methoxymethyl, (meth)acrylic acid ethoxyethyl, (meth)acrylic acid methoxyethoxyethyl, (meth)acrylic acid cyanomethyl, (meth)acrylic acid 2-cyanoethyl, (meth)acrylic acid 1-cyanopropyl, (meth)acrylic acid 2-ethyl-6-cyanohexyl, (meth)acrylic acid 3-cyanopropyl, (meth)acrylic acid hydroxyethyl, (meth)acrylic acid hydroxypropyl, glycidyl (meth)acrylate, and dimethylami1noethyl (meth)acrylate. The content of the ethylenically unsaturated monomer unit may be 0.5 wt% to 5 wt% with respect to the total content of the hydrogenated nitrile-based copolymer.

Method for manufacturing hydrogenated nitrile-based latex

The present invention provides a method for manufacturing a hydrogenated nitrile-based latex including a hydrogenated nitrile-based copolymer having low viscosity and low molecular weight in the absence of a precious metal catalyst.

The method for manufacturing a hydrogenated nitrile-based latex includes polymerizing a monomer mixture including a conjugated diene-based monomer and an ethylenically unsaturated nitrile-based monomer in the presence of an emulsifier to prepare a nitrile-based copolymer (S1); hydrogenating the nitrile-based copolymer to prepare a hydrogenated nitrile-based copolymer (S2); subjecting the hydrogenated nitrile-based copolymer to ozonolysis and oximation (S3), where step (S3) involves bubbling a mixture of air and ozone into the hydrogenated nitrile-based copolymer and adding dropwise 0.05 mol to 0.40 mol of hydroxylamine, and the mixture of air and ozone includes 0.3 mol to 0.7 mol of ozone.

In addition, in step (S3), at least 60 wt% of a total input amount of hydroxylamine may be added dropwise to the hydrogenated nitrile-based copolymer concurrently with the bubbling of the mixture of air and ozone, and the remainder of the total input amount may be added dropwise after the bubbling is completed.

In this case, monomers used in the preparation of the nitrile-based copolymer are as described above.

Hereinafter, the method for manufacturing a hydrogenated nitrile-based latex according to the present invention will be described in more detail, broken down into steps.

*Step (S1)*

Step (S1) is a step for copolymerizing a conjugated diene-based monomer and an ethylenically unsaturated nitrile-based monomer to prepare a nitrile-based copolymer, and may be performed by polymerizing a monomer mixture including a conjugated diene-based monomer and an ethylenically unsaturated nitrile-based monomer in the presence of an emulsifier. In addition, the monomer mixture may include an ethylenically unsaturated nitrile-based monomer in an amount of 28 wt% to 39 wt%, 30 wt% to 38 wt%, or 32 wt% to 36 wt%, which may be beneficial for controlling the residual double bond content of the hydrogenated nitrile-based copolymer obtained therefrom within the range described above.

In this case, the polymerization may be performed through typical emulsion polymerization, and the emulsifier may be at least one fatty acid salt selected from the group consisting of oleic acid, rosin acid, lauric acid, myristic acid, palmitic acid, stearic acid, naphthalene sulfonic acid, and eicosanoic acid; at least one sulfonate-based emulsifier selected from the group consisting of a sulfosuccinate-based emulsifier, a disulfonate-based emulsifier, and a linear alkylbenzene sulfonate-based emulsifier, and a mixture thereof.

In addition, the polymerization may be performed by further using additives such as a polymerization initiator and a molecular weight regulator, and as the polymerization initiator, at least one selected from the group consisting of inorganic peroxides such as sodium persulfate, potassium persulfate, ammonium persulfate, potassium perphosphate, and hydrogen peroxide; organic peroxides such as t-butyl peroxide, cumene hydroperoxide, p-menthane hydroperoxide, di-t-butyl peroxide, t-butylcumyl peroxide, acetyl peroxide, isobutyl peroxide, octanoyl peroxide, dibenzoyl peroxide, 3,5,5-trimethylhexanol peroxide, and t-butyl peroxy isobutyrate; and azobis-based compounds such as azobisisobutyronitrile, azobis-2,4-dimethylvaleronitrile, azobiscyclohexanecarbonitrile, and azobisisobutyric acid (butyric acid)methyl may be used.

In addition, as the molecular weight regulator, at least one selected from the group consisting of n-octyl mercaptan, n-dodecyl mercaptan, n-decyl mercaptan, t-dodecyl mercaptan, 2,2,4,6,6-pentamethylheptane-4-thiol, and 2,2,4,6,6,8,8-heptamethylnonane-4-thiol may be used.

In addition, upon the polymerization, additives such as an activator, a chelating agent, a dispersing agent, a pH regulator, a deoxidizing agent, a particle size regulator, an anti-aging agent, and an oxygen scavenging agent may be used within a range that does not degrade the physical properties of rubber, as needed.

In addition, the polymerization may be performed at a temperature ranging from 10°C to 90°C or at a temperature ranging from 10°C to 75°C.

In addition, after initiating the polymerization, a polymerization terminator may be added to terminate the polymerization, and in this case, the polymerization terminator may be one commonly used in the art, and may include, for example, hydroxylamine, N,N-diethyl hydroxylamine, hydroxy amine sulfate, diethyl hydroxy amine, hydroxy amine sulfonic acid and an alkali metal ion thereof, sodium dimethyl dithio carbamate, a hydroquinone derivative, an aromatic hydroxy dithio carboxylic acid such as hydroxy diethyl benzene dithio carboxylic acid and hydroxy dibutyl benzene dithio carboxylic acid, and the like.

In addition, after the polymerization, a nitrile-based copolymer may be obtained in the form of a hydrogenated nitrile-based latex, or a typical post-treatment process may be performed, and for example, at least any one post-treatment process selected from coagulation, solvent removal or precipitation, and drying may be performed to obtain a nitrile-based copolymer.

*Step (S2)*

Step (S2) is a step for hydrogenating the prepared nitrile-based copolymer to manufacture a hydrogenated nitrile-based copolymer, and the hydrogenating may be performed in the presence of an oxidizing agent and a reducing agent.

The oxidizing agent may be at least one selected from the group consisting of oxygen and a peroxide, the peroxide may be hydrogen peroxide, and the content of the oxidizing agent may be 0.8 to 1.2 molar equivalents or 0.9 to 1.1 molar equivalents, with respect to the number of moles of double bonds in the nitrile-based copolymer.

In addition, the reducing agent may be at least one selected from the group consisting of hydrazine and hydrazine hydrate, and the content of the reducing agent may be 0.8 to 1.2 molar equivalents or 0.9 to 1.0 molar equivalents with respect to the number of moles of double bonds in the nitrile-based copolymer.

In addition, when the oxidizing agent and reducing agent are used in the content within the above range, the preparation of a hydrogenated nitrile-based copolymer having a residual double bond content of 40 wt% or less may be more easily achieved.

In addition, the hydrogenation reaction may be performed at a temperature ranging from 30°C to 90°C or at a temperature ranging from 30°C to 70°C, and may be performed for 10 hours to 20 hours or 12 hours to 20 hours.

*Step (S3)*

Step (S3) is a step for preparing a hydrogenated nitrile-based copolymer subjected to ozonolysis from the prepared hydrogenated nitrile-based copolymer, and introducing an oxime group through a terminal oximation reaction simultaneously or sequentially, and may be performed by subjecting the hydrogenated nitrile-based copolymer to ozonolysis and oximation reactions.

Specifically, the ozonolysis reaction is for removing a residual reducing agent and splitting a polymer chain to generate aldehyde groups at a polymer chain terminal and lowering molecular weight, and by controlling reaction conditions appropriately during the ozonolysis reaction, a hydrogenated nitrile-based copolymer having a controlled amount of aldehyde terminal groups may be obtained. In addition, the oximation reaction may substitute an aldehyde terminal group produced by the ozonolysis reaction with an oxime group and concurrently inhibit a reversible reaction to prepare an oximated hydrogenated nitrile-based copolymer having a controlled amount of oximated terminal. Therefore, the manufacturing method according to the present invention obtains a hydrogenated nitrile-based copolymer having an aldehyde terminal group through step (S3), and subjecting the hydrogenated nitrile-based copolymer to an oximation reaction to substitute the aldehyde terminal group with an oxime group, thereby preparing a hydrogenated nitrile-based copolymer having an oxime group introduced into a polymer chain. That is, to manufacture a hydrogenated nitrile-based copolymer having a desired amount of oxime, the ozonolysis reaction and the oximation reaction need to be appropriately controlled concurrently.

In the manufacturing method according to the present invention, step (S3) may be performed by bubbling a mixture of air and ozone into the hydrogenated nitrile-based copolymer, and adding dropwise 0.05 mol to 0.40 mol of hydroxyamine. In this case, the hydroxyamine may be added dropwise to the hydrogenated nitrile-based copolymer in an amount of at least 60 wt% of a total input amount of hydroxyamine concurrently with the bubbling of the mixture of air and ozone, and the remainder of the total input amount may be added dropwise after the bubbling is completed, and the mixture of air and ozone may include 0.3 mol to 0.7 mol of ozone.

Step (S3) may be performed at a temperature ranging from 0°C to 75°C.

Conductive material dispersion

The present invention provides a conductive material dispersion having excellent dispersibility.

The conductive material dispersion according to the present invention may include a conductive material, a dispersion medium, and a hydrogenated nitrile-based copolymer, and the hydrogenated nitrile-based copolymer may have an oxime content of 0.1 wt% to 6.5 wt%.

In addition, the hydrogenated nitrile-based copolymer may have a residual double bond content of 40 wt% or less and a weight average molecular weight of 100,000 g/mol or less.

In addition, the hydrogenated nitrile-based copolymer may have a solvent displacement viscosity of 10 cps to 200 cps, and the solvent displacement viscosity may be measured using a Brookfield viscometer (#63 spin, 25°C) for a solution in which the hydrogenated nitrile-based copolymer is dissolved at 16 wt% in an amide-based dispersion medium.

In addition, the conductive material dispersion according to the present invention may have a viscosity of 1,500 Pa.s to 2,500 Pa.s, and thus may have excellent dispersibility.

In addition, the conductive material dispersion according to the present invention may have a particle size distribution $[(D_{90}-D_{10})/D_{50}]$ of 1 to 2 or 1.0 to 1.5. The conductive material dispersion according to the present invention includes the hydrogenated nitrile-based latex described above as a dispersant, and the dispersant is dispersed in the dispersion by physically or chemically bonding to a surface of the conductive material to form conductive material-dispersant complex particles, and satisfying the narrow particle size distribution indicate that the conductive material dispersion according to the present invention has excellent uniform dispersibility.

In the particle size distribution, $D_{10}$, $D_{50}$, and $D_{90}$ indicate particle sizes at 10%, 50%, and 90% of the particle size distribution, respectively, and the $D_{10}$ of the conductive material dispersion according to the present invention may be 1 to 3 $\mu$m, 1 to 2 $\mu$m, or 1.1 to 1.7 $\mu$m, $D_{50}$ of the conductive material may be 2 to 5 $\mu$m, 2.5 to 4.0 $\mu$m, or 2.7 to 3.0 $\mu$m, and $D_{90}$ of the conductive material may be 3 to 10 $\mu$m, 4 to 8 $\mu$m, or 4.5 to 5.5 $\mu$m.

In addition, the conductive material according to the present invention may be Ketjen black, fullerene, graphene, carbon nanotube, or carbon black.

In addition, the hydrogenated nitrile-based latex according to the present invention is applicable to a wide range of applications such as timing belts, seals, hoses, diaphragms, rolls, dispersants, and electrode active material slurry compositions.

## **Example**

Hereinafter, the present invention will be described in more detail with reference to Examples. However, the following Examples are for illustrative purposes only to describe the present invention and are not intended to limit the scope of the present invention.

### **Example 1**

#### (1) Manufacture of nitrile-based copolymer latex

An activation solution was prepared by dissolving 706.8 g of ion exchange water, 0.19 g of ferrosulfate (FES), 25.75 g of sodium formaldehyde sulfoxylate (SFS), and 3.50 g of disodium ethylenediaminetetraacetate (EDTA).

In a nitrogen-substituted polymerization reactor, 100 parts by weight of a monomer formed of 66 wt% of 1,3-butadiene and 34 wt% of acrylonitrile, 0.5 parts by weight of alkyldiphenyloxide disulfonate (DOWFAX™2A1, DOW), 1.0 parts by weight of ammonium polyoxyalkylene alkenyl ether sulfate (LATEMUL PD-104, KAO Chemicals Global), 0.05 parts by weight of diisopropylbenzene hydroperoxide (DIPHP, 54 wt% solution), 0.5 parts by weight of pentamethylheptanethiol (TIB-TDM, Chevron Phillips, containing 65 mol% or greater of 2,2,4,4,6-pentamethylheptane-4-thiol and the remaining isomers), and 200 parts by weight of ion exchange water were mixed, and when the temperature of the mixture reached 10°C, 5 parts by weight of the activation solution was added to initiate emulsion polymerization. When the polymerization conversion rate reached 85%, the polymerization was terminated to obtain a nitrile-based copolymer latex.

#### (2) Manufacture of hydrogenated nitrile-based latex

In a 5-liter three-necked round-bottom flask equipped with a mechanical paddle stirrer, a thermometer, a reflux condenser, and an inlet tube for supplying a hydrogen peroxide solution, 322.58 g (31% solid content, 100 g of copolymer, 1.2 mol of double bond content) of the prepared nitrile-based copolymer latex was added and 119.8 g (1.2 mol) of 64% aqueous hydrazine was added while stirring the prepared nitrile-based copolymer latex at room temperature. The mixture was heated to 45°C in a constant temperature bath, and then 141.53 g (1.29 mol) of 31% aqueous hydrogen peroxide was added dropwise using a pump over 16 hours to perform a hydrogenation reaction.

Thereafter, an air/ozone mixture containing 0.3 mol of ozone was subjected to passing through a glass tube at 45°C to bubble gas into the bottom of the hydrogenated nitrile-based copolymer latex so as to perform an ozonolysis reaction. Concurrently with the bubbling, 0.03 mol of hydroxylamine were added dropwise to the hydrogenated nitrile-based copolymer latex, and after completion of the bubbling, 0.02 mol of hydroxylamine were added dropwise and stirred for 2 hours for a reaction to manufacture a hydrogenated nitrile-based latex including a hydrogenated nitrile-based copolymer.

### **Example 2**

With respect to Example 1, except that 0.067 mol of hydroxylamine were added dropwise concurrently with bubbling, and 0.033 mol of hydroxylamine were added dropwise after the bubbling was completed, a hydrogenated nitrile-based latex was manufactured in the same manner as in Example 1.

**Example 3**

With respect to Example 1, except that 0.13 mol of hydroxylamine were added dropwise concurrently with bubbling, and 0.07 mol of hydroxylamine were added dropwise after the bubbling was completed, a hydrogenated nitrile-based latex was manufactured in the same manner as in Example 1.

**Example 4**

With respect to Example 3, except that bubbling was performed using an air/ozone mixture containing 0.7 mol of ozone, a hydrogenated nitrile-based latex was manufactured in the same manner as in Example 3.

**Example 5**

With respect to Example 4, except that 0.27 mol of hydroxylamine were added dropwise concurrently with bubbling, and 0.13 mol of hydroxylamine were added dropwise after the bubbling was completed, a hydrogenated nitrile-based latex was manufactured in the same manner as in Example 1.

**Example 6**

With respect to Example 2, except that 100 parts by weight of a monomer formed of 65 wt% of 1,3-butadiene and 35 wt% of acrylonitrile was used when manufacturing a nitrile-based copolymer latex, a hydrogenated nitrile-based latex was manufactured in the same manner as in Example 2.

**Example 7**

With respect to Example 6, except that bubbling was performed using an air/ozone mixture containing 0.5 mol of ozone, 0.13 mol of hydroxylamine were added dropwise concurrently with bubbling, and 0.07 mol of hydroxylamine were added dropwise after the bubbling was completed, a hydrogenated nitrile-based latex was manufactured in the same manner as in Example 6.

**Example 8**

With respect to Example 1, except that 100 parts by weight of a monomer formed of 59 wt% of 1,3-butadiene and 41 wt% of acrylonitrile was used when manufacturing a nitrile-based copolymer latex, a hydrogenated nitrile-based latex was manufactured in the same manner as in Example 1.

**Example 9**

With respect to Example 1, except that 0.05 mol of hydroxylamine were added dropwise only after bubbling was completed, and stirred for 2 hours for a reaction, a hydrogenated nitrile-based latex was manufactured in the same manner as in Example 1.

**Comparative Example 1**

With respect to Example 1, except that bubbling was performed using an air/ozone mixture containing 0.1 mol of ozone, 0.01 mol of hydroxylamine were added dropwise only after the bubbling was completed, and stirred for 2 hours for a reaction, a hydrogenated nitrile-based latex was manufactured in the same manner as in Example 1.

**Comparative Example 2**

With respect to Example 1, except that bubbling was performed using an air/ozone mixture containing 0.8 mol of ozone, and hydroxylamine was not added, a hydrogenated nitrile-based latex was manufactured in the same manner as in Example 1.

**Comparative Example 3**

With respect to Example 1, except that bubbling was performed using an air/ozone mixture containing 0.8 mol of ozone, 0.2 mol of hydroxylamine were added dropwise concurrently with bubbling, and 0.2 mol of hydroxylamine were added dropwise after the bubbling was completed, a hydrogenated nitrile-based latex was manufactured in the same manner as in Example 1.

**Comparative Example 4**

In the same manner as in Example 1, a nitrile-based copolymer latex was manufactured, coagulated, and obtained as rubber, which was then dissolved in monochlorobenzene (mCB), and 1 kg of the nitrile-based rubber (based on solid content) was pressurized into a 2 L autoclave reactor with 1 bar of argon gas. After the pressurization of the nitrile-based rubber was completed, the inside of the reactor was replaced with a hydrogen gas atmosphere of 10 bar, and then the temperature was raised to 70°C, and a metathesis hydrogenation composition in which a catalyst and a cocatalyst were dissolved in 10 g of monochlorobenzene was introduced into the reactor. In this case, the metathesis hydrogenation composition included 0.8 parts by weight of Wilkinson's catalyst (Sigma-Aldrich) as a rhodium-based catalyst with respect to 100 parts by weight of the nitrile-based rubber, and 2 equivalents of triphenylphosphine (Sigma-Aldrich) as a cocatalyst with respect to 1 equivalent of the rhodium-based catalyst. Thereafter, the hydrogen gas pressure inside the reactor was increased to 40 bar, and the reaction was performed for 6 hours. After completion of the reaction, 0.2 parts by weight of Irganox 1076 (BASF) was added to the reactor with respect to 100 parts by weight of the nitrile-based rubber, and the hydrogenated nitrile-based rubber was precipitated and recovered using methanol.

**Experimental Example 1**

The hydrogenated nitrile-based copolymers prepared in Examples and Comparative Examples were measured for residual double bond content, weight average molecular weight, oxime content, and solvent displacement viscosity, and the results are shown in Table 1 below.

(1) Residual double bond content (wt%)

First, nitrogen elements in each hydrogenated nitrile-based latex including the hydrogenated nitrile-based copolymer were analyzed using an elemental analyzer (ICP-OES device, RF power 1300 W, plasma gas flow: 15 l/min), and wt% (a) was calculated from the results. In this case, 0.1 g of the hydrogenated nitrile-based copolymer was diluted in 15 ml of hydrofluoric acid, heat-treated by raising the temperature from room temperature ($23 \pm 5$°C) to 250°C for 90 minutes, and then maintained for 60 minutes to prepare a sample for ICP-OES measurement.

Thereafter, NMR peaks were obtained by $^1$H-NMR measurement, and nitrile group content (wt%) was calculated through the following Equation 1, using the MestReC program and taking an integral value of hydrogen in a nitrile group (N≡C-C-H) at 2.5 ppm, an integral value of hydrogen in an acetaldoxime group (N=C-H) at 6.9 ppm and 7.5 ppm, and an integral value of hydrogen in 1,4-butadiene (H-C=C-H) at 5.6 ppm/2 as a molar ratio. In this case, $^1$H-NMR measurement was performed at room temperature ($23 \pm 5$°C) using a Bruker Avance Neo 500 MHz NMR device. In this case, the sample was prepared by dissolving 0.1 g of hydrogenated nitrile-based copolymer in 1 ml of trichloroethylene (TCE).

Nitrile group content (wt%) = [Nitrile element wt% (a) $\times$ (Nitrile group molar ratio / (Nitrile group molar ratio + Acetaldoxime group molar ratio))] $\times$ [Nitrile group molecular weight / Nitrogen atomic weight]  [Mathematical Equation 1]

Thereafter, the integral value (peak area) of the nitrile group peak at 2.5 ppm and the double bond peak at 5.5 ppm were calculated from the NMR peaks to obtain a weight ratio of the nitrile group and the double bond below, and the residual double bond content (wt%) was calculated through Mathematical Equation 2 below.

Nitrile group weight ratio (b) = [Nitrile group molar ratio (NMR) $\times$ Nitrile group molecular weight] Double bond weight ratio (c) = [Double bond molar ratio (NMR) $\times$ Butadiene molecular weight]

Residual double bond content (wt%) = [Nitrile group content (wt%) / (Nitrile group weight ratio (b) / Total weight ratio (Nitrile group weight ratio (b) + Double bond weight ratio (c))] × [Double bond weight ratio (c) / Total weight ratio (Nitrile group weight ratio (b) + Double bond weight ratio (c)]    [Mathematical Equation 2]

(2) Weight average molecular weight (g/mol) and molecular weight distribution (PDI)

Weight average molecular weight and number average molecular weight were measured through gel permeation chromatography, and molecular weight distribution (Mw/Mn) was calculated from the weight average molecular weight (Mw) and the number average molecular weight (Mn).

Gel permeation chromatography (Waters PL-GPC220) measurement was performed using a Polymer Lavoratories PLgel MIX-B 300 mm column under the following conditions.

Measurement temperature: 38°C
Flow rate: 1 ml/min
Injection volume: 200 μl
Standard sample: Polystyrene

(3) Oxime content (wt%)

The oxime content was determined from the content of an acetaldoxime group in copolymer molecules.

The acetaldoxime content was measured by H-NMR to obtain NMR peaks, and an $\alpha$-hydrogen peak of a nitrile group was determined at 2.5 ppm from the results, hydrogen peaks of syn-aldoxime and anti-aldoxime were determined at 6.9 ppm and 7.5 ppm, an integral value (peak area) was calculated to obtain a nitrile group weight ratio (b) and an acetaldoxime group weight ratio (d), and acetaldoxime content (wt%) was calculated using Mathematical Equation 3. In this case, 1H-NMR measurement was performed at room temperature (23±5°C) using a Bruker Avance Neo 500 MHz NMR device. In this case, the sample was prepared by dissolving 0.1 g of hydrogenated nitrile-based copolymer in 1 ml of trichloroethylene (TCE).

In addition, an integral value of each peak was calculated using the MestReC program and taking an integral value of hydrogen in a nitrile group (N≡C-C-H) at 2.5 ppm, an integral value of hydrogen in an acetaldoxime group (N=C-H) at 6.9 ppm and 7.5 ppm, and an integral value of hydrogen in 1,4-butadiene (H-C=C-H) at 5.6 ppm/2 as a molar ratio.

Nitrile group weight ratio (b) = [Nitrile group molar ratio (NMR) × Nitrile group molecular weight] Acetaldoxime group weight ratio (d) = [Acetaldoxime group molar ratio (NMR) × Acetaldoxime group molecular weight] Acetaldoxime content (wt%) = [Nitrile group content (wt%) / {Nitrile group weight ratio (b) / Total weight ratio (Nitrile group weight ratio (b) + Acetaldoxime group weight ratio (d))}] × [Acetaldoxime group weight ratio (d) / Total weight ratio (Nitrile group weight ratio (b) + Acetaldoxime group weight ratio (d))]    [Mathematical Equation 3]

(4) Viscosity

In a 5-liter sealed flask connected to a mechanical paddle stirrer, a reflux condenser, an inlet tube for supplying N-methyl-2-pyrrolidone (NMP), and a vacuum pump, 600 g of each hydrogenated nitrile-based latex (100 g of rubber, 17 wt% solid content) was stirred while 525 L of N-methyl-2-pyrrolidone (NMP) was added dropwise using a pump for 1 hour, and when the addition was completed, the temperature of the sealed flask was raised to 90°C and the pressure was lowered to 10 torr by operating the vacuum pump. The pressure was reduced for 2 hours to sufficiently remove water to prepare a 16 wt% solvent displacement solution, which was then measured using a Brookfield viscometer (#63 spin, 25°C).

[Table 1]

| Item | GPC | | Residual double bond content (wt%) | Oxime content (wt%) | Solvent displacement viscosity (cps) |
|---|---|---|---|---|---|
| | Mw (×1,000, g/mol) | PDI | | | |
| Example 1 | 18 | 2.2 | <1 | 0.96 | 24 |

(continued)

| Item | GPC | | Residual double bond content (wt%) | Oxime content (wt%) | Solvent displacement viscosity (cps) |
|---|---|---|---|---|---|
| | Mw (×1,000, g/mol) | PDI | | | |
| Example 2 | 25 | 2.4 | <1 | 1.45 | 24 |
| Example 3 | 17 | 2.1 | <1 | 2.52 | 23 |
| Example 4 | 22 | 2 .3 | <1 | 3.90 | 11 |
| Example 5 | 7 | 1.9 | <1 | 5.14 | 10 |
| Example 6 | 17 | 2.1 | <1 | 1.31 | 24 |
| Example 7 | 11 | 1.9 | <1 | 2.41 | 16 |
| Example 8 | 19 | 2.2 | <1 | 0.70 | 26 |
| Example 9 | 17 | 2.1 | <1 | 0. 50 | 24 |
| Comparative Example 1 | 55 | 3.2 | <1 | 0.08 | 84 |
| Comparative Example 2 | 35 | 4.5 | <1 | - | - |
| Comparative Example 3 | 4 | 1.9 | <1 | 6.7 | 10 |
| Comparative Example 4 | 53 | 2 .2 | <1 | - | 86 |

As shown in Table 1 above, the hydrogenated nitrile-based copolymers of Examples 1 to 9 had an oxime content of 0.1 wt% to 6.5 wt%, more specifically, 0.9 wt% to 5.5 wt%, a residual double bond content of less than 1 wt%, a weight average molecular weight of 5,000 g/mol to 30,000 g/mol, and a solvent displacement viscosity of 10 cps to 50 cps.

**Experimental Example 2**

A conductive material dispersion including the hydrogenated nitrile-based latex manufactured in Examples and Comparative Examples was prepared, and the conductive material dispersion was measured for viscosity and dispersion particle size (particle diameter). The results are shown in Table 2 below.

(1) Preparation of conductive material pre-dispersion

In a 5-liter sealed flask connected to a mechanical paddle stirrer, a reflux condenser, an inlet tube for supplying N-methyl-2-pyrrolidone (NMP), and a vacuum pump, 600 g of each hydrogenated nitrile-based latex (100 g of rubber, 17 wt% solid content) was stirred while 525 L of N-methyl-2-pyrrolidone (NMP) was added dropwise using a pump for 1 hour, and when the addition was completed, the temperature of the sealed flask was raised to 90°C and the pressure was lowered to 10 torr by operating the vacuum pump. The pressure was reduced for 2 hours to sufficiently remove water to prepare a solvent displacement solution in which the hydrogenated nitrile-based copolymer was dissolved in the N-methyl-2-pyrrolidone at 16 wt%.
The conductive material pre-dispersion was prepared by mixing 3.3 g of bundled carbon nanotubes having a unit diameter of 13 nm and a BET of 165-205 $m^2$/g, 96.04 g of N-methylpyrrolidone (NMP) as a dispersion medium, and each of the solvent displacement solutions (0.66 g with respect to the hydrogenated nitrile-based copolymer) using a beads mill.

(2) Viscosity

The conductive material pre-dispersion was measured using a viscometer (Viscometer TV-22, TOKI) at 25°C and 1 rpm.

(3) Particle size analysis

Each conductive material pre-dispersion was dispersed in NMP, and then introduced into a laser diffraction particle size measuring device (Malvern, Mastersizer 3000) to measure the difference in diffraction patterns according to particle size when particles passed through a laser beam, thereby calculating particle size distribution, and measuring 10% ($D_{10}$), 50% ($D_{50}$), and 90% ($D_{90}$) of the volume cumulative distribution according to particle size (particle diameter). In addition, particle size distribution ($[(D_{90}-D_{10})/D_{50}]$) was calculated from the measured particle size results.

[Table 2]

| Item | Viscosity (Pa·s) | Dispersed particle size characteristics | | | |
|---|---|---|---|---|---|
| | | $D_{10}$ (μm) | $D_{50}$ (μm) | $D_{90}$ (μm) | $(D_{90}-D_{10})/D_{50}$ |
| Example 1 | 2180 | 1.2 | 2.8 | 5.1 | 1.39 |
| Example 2 | 1710 | 1.4 | 2.8 | 4.9 | 1.25 |
| Example 3 | 1690 | 1.2 | 2.8 | 4.7 | 1.25 |
| Example 4 | 1580 | 1.3 | 2.8 | 4.8 | 1.25 |
| Example 5 | 1550 | 1.2 | 2.7 | 4.7 | 1.30 |
| Example 6 | 1720 | 1.3 | 2.9 | 4.9 | 1.24 |
| Example 7 | 1600 | 1.2 | 2.8 | 4.8 | 1.29 |
| Example 8 | 2520 | 1.3 | 3.0 | 5.3 | 1.33 |
| Example 9 | 2680 | 1.3 | 2.9 | 5.2 | 1.34 |
| Comparative Example 1 | 3530 | 1.3 | 2.9 | 5.4 | 1.41 |
| Comparative Example 2 | 2550 | 2.2 | 4.6 | 13.5 | 2.46 |
| Comparative Example 3 | 2710 | 1.3 | 3.5 | 7.0 | 1.63 |
| Comparative Example 4 | 3770 | 1.3 | 2.9 | 5.5 | 1.45 |

As shown in Table 2 above, Examples 1 to 9 have a reduced viscosity compared to Comparative Examples, and at the same time, it is determined that Examples 1 to 9 have uniform particle characteristics with a narrow particle size distribution of 1.0 to 1.5. In addition, Examples 1 to 7 showed further improved viscosity characteristics with a viscosity of less than 2500 cps compared to Examples 8 and 9, and in this case, Examples 1 to 7 are conductive material pre-dispersion obtained using a hydrogenated nitrile-based latex including a hydrogenated nitrile-based copolymer having an oxime content of 0.9 wt% or greater.

**Claims**

1. A hydrogenated nitrile-based latex comprising a hydrogenated nitrile-based copolymer having an oxime content of 0.1 wt% to 6.5 wt%.

2. The hydrogenated nitrile-based latex of claim 1, wherein the hydrogenated nitrile-based copolymer has an oxime content of 0.5 wt% to 6.0 wt%.

3. The hydrogenated nitrile-based latex of claim 1, wherein the hydrogenated nitrile-based copolymer has a residual double bond content of 40 wt% or less.

4. The hydrogenated nitrile-based latex of claim 1, wherein the hydrogenated nitrile-based copolymer has a residual double bond content of 10 wt% or less.

5. The hydrogenated nitrile-based latex of claim 1, wherein the hydrogenated nitrile-based copolymer has a weight average molecular weight of 200,000 g/mol or less.

6. The hydrogenated nitrile-based latex of claim 1, wherein the hydrogenated nitrile-based copolymer has a weight average molecular weight of 100,000 g/mol or less.

7. The hydrogenated nitrile-based latex of claim 1, wherein the hydrogenated nitrile-based copolymer has a weight average molecular weight of 50,000 g/mol or less.

8. The hydrogenated nitrile-based latex of claim 1, wherein the hydrogenated nitrile-based copolymer has a solvent displacement viscosity of 10 cps to 200 cps, and the solvent displacement viscosity is measured using a Brookfield viscometer (#63 spin, 25°C) for a solution in which the hydrogenated nitrile-based copolymer is dissolved at 16 wt% in an amide-based dispersion medium.

9. The hydrogenated nitrile-based latex of claim 1, wherein the hydrogenated nitrile-based copolymer has a residual double bond content of 3 wt% or less, a weight average molecular weight of 5,000 g/mol to 30,000 g/mol, an oxime content of 0.9 wt% to 5.5 wt%, and a solvent displacement viscosity of 10 cps to 50 cps.

10. The hydrogenated nitrile-based latex of claim 1, wherein the hydrogenated nitrile-based copolymer comprises an ethylenically unsaturated nitrile-based monomer unit, and a hydrogenated conjugated diene-based monomer unit.

11. The hydrogenated nitrile-based latex of claim 10, wherein a weight ratio of the ethylenically unsaturated nitrile-based monomer unit and the hydrogenated conjugated diene-based monomer unit is 28:72 to 39:61.

12. The hydrogenated nitrile-based latex of claim 10, wherein the hydrogenated nitrile-based copolymer further comprises a conjugated diene-based monomer unit.

13. A method for manufacturing a hydrogenated nitrile-based latex comprising a hydrogenated nitrile-based copolymer, the method comprising:

polymerizing a monomer mixture comprising a conjugated diene-based monomer and an ethylenically unsaturated nitrile-based monomer in the presence of an emulsifier to prepare a nitrile-based copolymer (S1);
hydrogenating the nitrile-based copolymer to prepare a hydrogenated nitrile-based copolymer (S2); and
subjecting the hydrogenated nitrile-based copolymer to ozonolysis and oximation (S3);
wherein step (S3) involves bubbling a mixture of air and ozone into the hydrogenated nitrile-based copolymer and adding dropwise 0.05 mol to 0.40 mol of hydroxylamine, and
the mixture of air and ozone comprises 0.3 mol to 0.7 mol of ozone.

14. The method of claim 13, wherein in step (S3), at least 60 wt% of a total input amount of hydroxylamine is added dropwise to the hydrogenated nitrile-based copolymer concurrently with the bubbling of the mixture of air and ozone, and the remainder of the total input amount is added dropwise after the bubbling is completed.

15. The method of claim 13, wherein in step (S1), the monomer mixture comprises 28 wt% to 39 wt% of the ethylenically unsaturated nitrile-based monomer.

16. The method of claim 13, wherein the hydrogenating in step (S2) is performed in the presence of an oxidizing agent and a reducing agent.

17. The method of claim 13, wherein step (S3) is performed at a temperature ranging from 0°C to 75°C.

18. A conductive material dispersion comprising a conductive material, a dispersion medium, and a hydrogenated nitrile-based copolymer,
wherein the hydrogenated nitrile-based copolymer has an oxime content of 0.1 wt% to 6.5 wt%.

19. The conductive material dispersion of claim 18, wherein the hydrogenated nitrile-based copolymer has a residual double bond content of 40 wt% or less and a weight average molecular weight of 100,000 g/mol or less.

20. The conductive material dispersion of claim 18, wherein the hydrogenated nitrile-based copolymer has a solvent displacement viscosity of 10 cps to 200 cps, and the solvent displacement viscosity is measured using a Brookfield viscometer (#63 spin, 25°C) for a solution in which the hydrogenated nitrile-based copolymer is dissolved at 16 wt% in an amide-based dispersion medium.

21. The conductive material dispersion of claim 18, having a viscosity of 1500 Pa.s to 2,500 Pa.s.

22. The conductive material dispersion of claim 18, having a particle size distribution $[(D_{90}-D_{10})/D_{50}]$ of 1 to 2.

23. The conductive material dispersion of claim 18, wherein the conductive material is at least one selected from the group consisting of carbon black, Ketjen black, fullerene, graphene, carbon nanotube, carbon black, and graphite.

## INTERNATIONAL SEARCH REPORT

| International application No. |
| --- |
| **PCT/KR2025/003051** |

| A. | CLASSIFICATION OF SUBJECT MATTER |
| --- | --- |

**C08C 19/02**(2006.01)i; **C08L 15/00**(2006.01)i; **C08F 236/12**(2006.01)i; **C08F 2/24**(2006.01)i; **C08K 3/04**(2006.01)i; **H01M 4/62**(2006.01)i; **H01M 4/139**(2010.01)i; **H01M 10/0525**(2010.01)i

According to International Patent Classification (IPC) or to both national classification and IPC

| B. | FIELDS SEARCHED |
| --- | --- |

Minimum documentation searched (classification system followed by classification symbols)

C08C 19/02(2006.01); B29C 41/14(2006.01); B29C 71/00(2006.01); B82B 1/00(2006.01); C01B 31/02(2006.01); C08L 33/08(2006.01); C08L 39/00(2006.01); C08L 9/00(2006.01); C08L 9/04(2006.01); H01M 4/13(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 니트릴(nitrile), 라텍스(latex), 옥심(oxime)

| C. | DOCUMENTS CONSIDERED TO BE RELEVANT | |
| --- | --- | --- |

| Category* | Citation of document, with indication, where appropriate, of the relevant passages | Relevant to claim No. |
| --- | --- | --- |
| X <br><br> Y | KR 10-0344137 B1 (ZEON CHEMICALS L.P.) 09 November 2002 (2002-11-09) <br> See claim 1; paragraphs [0010]-[0055]; and example 1. | 1-17 <br><br> 18-23 |
| Y | KR 10-2017-0030438 A (LG CHEM, LTD.) 17 March 2017 (2017-03-17) <br> See claim 1; and paragraphs [0026]-[0050]. | 18-23 |
| A | KR 10-2011-0088795 A (LG CHEM, LTD.) 04 August 2011 (2011-08-04) <br> See claims 1-11. | 1-23 |
| A | US 2021-0009791 A1 (ZEON CORPORATION) 14 January 2021 (2021-01-14) <br> See claims 1-6. | 1-23 |
| A | KR 10-2015-0016852 A (CHEIL INDUSTRIES INC.) 13 February 2015 (2015-02-13) <br> See claims 1-13. | 1-23 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 June 2025** | **16 June 2025** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2025/003051**

| Patent document cited in search report | | | Publication date (day/month/year) | Patent family member(s) | | | Publication date (day/month/year) |
|---|---|---|---|---|---|---|---|
| KR | 10-0344137 | B1 | 09 November 2002 | EP | 0751975 | A1 | 08 January 1997 |
| | | | | EP | 0751975 | A4 | 17 December 1997 |
| | | | | EP | 0751975 | B1 | 28 April 1999 |
| | | | | JP | 09-510498 | A | 21 October 1997 |
| | | | | JP | 3925939 | B2 | 06 June 2007 |
| | | | | KR | 10-1997-0701761 | A | 12 April 1997 |
| | | | | US | 5424356 | A | 13 June 1995 |
| | | | | US | 5442007 | A | 15 August 1995 |
| | | | | US | 5442009 | A | 15 August 1995 |
| | | | | WO | 95-25768 | A1 | 28 September 1995 |
| KR | 10-2017-0030438 | A | 17 March 2017 | CN | 108064255 | A | 22 May 2018 |
| | | | | CN | 108064255 | B | 27 March 2020 |
| | | | | EP | 3348582 | A1 | 18 July 2018 |
| | | | | EP | 3348582 | A4 | 05 June 2019 |
| | | | | EP | 3348582 | B1 | 07 April 2021 |
| | | | | JP | 2018-522803 | A | 16 August 2018 |
| | | | | JP | 2020-019705 | A | 06 February 2020 |
| | | | | JP | 6633654 | B2 | 22 January 2020 |
| | | | | KR | 10-2022399 | B1 | 18 September 2019 |
| | | | | US | 10141574 | B2 | 27 November 2018 |
| | | | | US | 2018-0226650 | A1 | 09 August 2018 |
| | | | | WO | 2017-043818 | A1 | 16 March 2017 |
| KR | 10-2011-0088795 | A | 04 August 2011 | KR | 10-1288780 | B1 | 22 July 2013 |
| US | 2021-0009791 | A1 | 14 January 2021 | CN | 111801379 | A | 20 October 2020 |
| | | | | CN | 111801379 | B | 26 July 2022 |
| | | | | EP | 3766930 | A1 | 20 January 2021 |
| | | | | EP | 3766930 | A4 | 24 November 2021 |
| | | | | EP | 3766930 | B1 | 11 May 2022 |
| | | | | JP | 2021-176921 | A1 | 25 February 2021 |
| | | | | JP | 7207397 | B2 | 18 January 2023 |
| | | | | KR | 10-2020-0131234 | A | 23 November 2020 |
| | | | | KR | 10-2620131 | B1 | 29 December 2023 |
| | | | | US | 11225566 | B2 | 18 January 2022 |
| | | | | WO | 2019-176921 | A1 | 19 September 2019 |
| KR | 10-2015-0016852 | A | 13 February 2015 | WO | 2015-020280 | A1 | 12 February 2015 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240032865

- KR 1020230022000 A